# EUROPEAN PATENT SPECIFICATION

(11) **EP 3 812 253 B1**
(45) Date of publication and mention of the grant of the patent: **03.05.2023**
(21) Application number: 20202779.3
(22) Date of filing: 20.10.2020
(51) Int. Cl.: B62J 9/14, B62J 43/16, B62M 7/06

(54) **STRADDLED ELECTRIC VEHICLE**
ELEKTRISCHES SATTELFAHRZEUG
VÉHICULE ÉLECTRIQUE À CALIFOURCHON

(30) Priority: 21.10.2019 JP 2019192190
(43) Date of publication of application: 28.04.2021
(73) Proprietor: YAMAHA HATSUDOKI KABUSHIKI KAISHA, Iwata-shi Shizuoka 438-8501 (JP)
(72) Inventor: NAKAO, Riki, Iwata-shi, Shizuoka, 438-8501 (JP)
(74) Representative: Grünecker Patent- und Rechtsanwälte PartG mbB

(56) References cited:
- EP-A1- 2 168 864
- EP-A1- 2 662 271
- EP-A1- 2 905 161
- DE-U1-202018 005 023
- US-A1- 2014 305 729

## Description

The present invention relates to a straddled electric vehicle according to the preamble of independent claim 1. Such a straddled electric vehicle can be taken from the prior art document US 2014/0305729 A1.

An electric two-wheeled vehicle includes an electric motor and a battery that stores power to be supplied to the electric motor. In the electric two-wheeled vehicle disclosed in JP 2005-201357 A, the case containing the electric motor is disposed behind the battery and below the seat. Two mounting portions (the shafts 18a and 18b in JP 2005-201357 A) are respectively provided on the upper and lower portions of the case, and the case is attached to the body frame at the two mounting portions.

In many electric two-wheeled vehicles, the space formed between the electric motor and the seat is effectively utilized. For example, in the electric two-wheeled vehicle of JP 2005-201357 A, a battery is disposed in this space. Another example is a two-wheeled vehicle in which a storage case for storing equipment such as a helmet is disposed in the space. If this space can be increased, the capacity of the battery disposed therein can be increased, or the capacity of the storage case can be increased.

It is the object of the present invention to provide a straddled electric vehicle in that capacity of the battery and/or capacity of a storage case can be increased. According to the present invention said object is solved by a straddled electric vehicle having the features of independent claim 1. Preferred embodiments are laid down in the dependent claims.
(1) An example of a straddled electric vehicle proposed in the present disclosure includes among other parts,
   a seat, a battery, a motor unit including an electric motor driven by power of the battery, the motor unit being disposed below the seat and behind the battery, and a body frame supporting the motor unit. The motor unit includes an upper mounting portion and a lower mounting portion that are attached to the body frame, and does not include a portion that is attached to the body frame rearward than the upper mounting portion and the lower mounting portion. The upper mounting portion is located forward than a rotation center of the electric motor. This structure can lower a position of the upper mounting portion as compared with a structure in which the upper mounting portion is located upward from the rotation center of the electric motor. As a result, the space between the seat and the motor unit can be increased.
(2) In the straddled electric vehicle of (1), the motor unit may include the electric motor, a first rotation shaft at the rotation center of the electric motor, a second rotation shaft away from the first rotation shaft, and a speed reduction mechanism supported by the first rotation shaft and the second rotation shaft. The second rotation shaft may be located below the first rotation shaft, and the lower mounting portion may be located forward than a rotation center of the second rotation shaft. This structure enables the lower mounting portion to be positioned higher as compared with a structure in which the lower mounting portion is positioned below the second rotation shaft. As a result, while ensuring the minimum ground height of the vehicle body, the position of the motor unit can be lowered.
(3) The straddled electric vehicle of (1) may further include a motor drive unit including a drive circuit that supplies power of the battery to the electric motor. The motor drive unit may be disposed behind the battery and in front of the motor unit, and the lower mounting portion may be located below a lower end of the motor drive unit. This structure allows the motor unit to be positioned closer to the motor drive unit that is located in front of the motor unit.
(4) In the straddled electric vehicle of (3), a lower surface of the motor drive unit may be located above a lower surface of the battery, and a position of the lower mounting portion may be a same height as the lower surface of the battery or higher than the lower surface of the battery. This structure can easily assure the minimum ground height of the vehicle body.
(5) In the straddled electric vehicle of (1), a position of the upper mounting portion may be lower than an upper end of the motor drive unit. This structure can increase space formed above the motor unit.
(6) The straddled electric vehicle of (1) further includes a motor drive unit including a drive circuit that supplies power of the battery to the electric motor. The motor drive unit may be disposed behind the battery and in front of the motor unit, and the body frame may include a support structure below the motor drive unit, the support structure being mounted on the lower mounting portion to support the motor unit. This structure can effectively utilize space formed below the motor drive unit to support the motor unit.
(7) In the straddled electric vehicle of (1), the motor unit may include the electric motor, a first rotation shaft at the rotation center of the electric motor, a second rotation shaft away from the first rotation shaft, and a speed reduction mechanism supported by the first rotation shaft and the second rotation shaft, and the second rotation shaft may be located below the first rotation shaft and forward than the first rotation shaft. This structure can increase a distance from the second rotation shaft to the axle of the rear wheel (in other words, the length of the rear arm) without increasing the wheel base.
(8) In the straddled electric vehicle of (7), the lower mounting portion may be located forward than the rotation center of the second rotation shaft. This structure enables the lower mounting portion to be positioned higher as compared with a structure in which the lower mounting portion is positioned below the second rotation shaft. As a result, while ensuring the minimum ground height of the vehicle body, the position of the motor unit can be lowered.
(9) The straddled electric vehicle of (8) further includes a motor drive unit including a drive circuit that supplies power of the battery to the electric motor. The position of the second rotation shaft may be lower than the lower end of the motor drive unit. This structure can easily prevent interference between the motor unit and the motor drive unit.
(10) In the straddled electric vehicle of (1), a storage case may be disposed above the motor unit and below the seat. With this structure, a case having a large capacity can be used as the storage case.
(11) The straddled electric vehicle of (1) may further include a rear wheel disposed behind the motor unit, a rear arm supporting the rear wheel, and a rear cushion coupled to the rear arm and the body frame. The upper end of the rear cushion may be located forward than the rear wheel and rearward than the upper mounting portion of the motor unit. This structure can reduce the vibration acting on the rear portion of the body frame through the rear cushion when the electric two-wheeled vehicle travels.

### BRIEF DESCRIPTION OF THE DRAWINGS

FIG. 1 is a side view illustrating an example of a straddled electric vehicle proposed in the present disclosure;
FIG. 2 is a side view of an entire vehicle body without a vehicle cover;
FIG. 3 is a right side view of a battery, a motor drive unit, and a motor unit that are mounted on a body frame;
FIG. 4A is a plan view of the body frame;
FIG. 4B is a rear view of the body frame;
FIG. 5 is a perspective view of the battery, the motor drive unit, and the motor unit;
FIG. 6 is a left side view of the battery, the motor drive unit, and the motor unit. In FIG. 6, an air guide shown in FIG. 5 covering the back of the motor drive unit is omitted;
FIG. 7 is a right side view of the battery, the motor drive unit, and the motor unit;
FIG. 8 is a plan view of the motor drive unit and the motor unit;
FIG. 9 is a perspective view illustrating the right side of the motor drive unit and the motor unit;
FIG. 10 is an exploded perspective view of the motor drive unit and the air guide;
FIG. 11 is a rear view of the motor drive unit and the air guide;
FIG. 12 is a perspective view illustrating a variation of the air guide; and
FIG. 13 is a perspective view of the air guide according to the variation in FIG. 12 viewed from the diagonally rear side.

### DETAILED DESCRIPTION OF THE PRESENT TEACHING

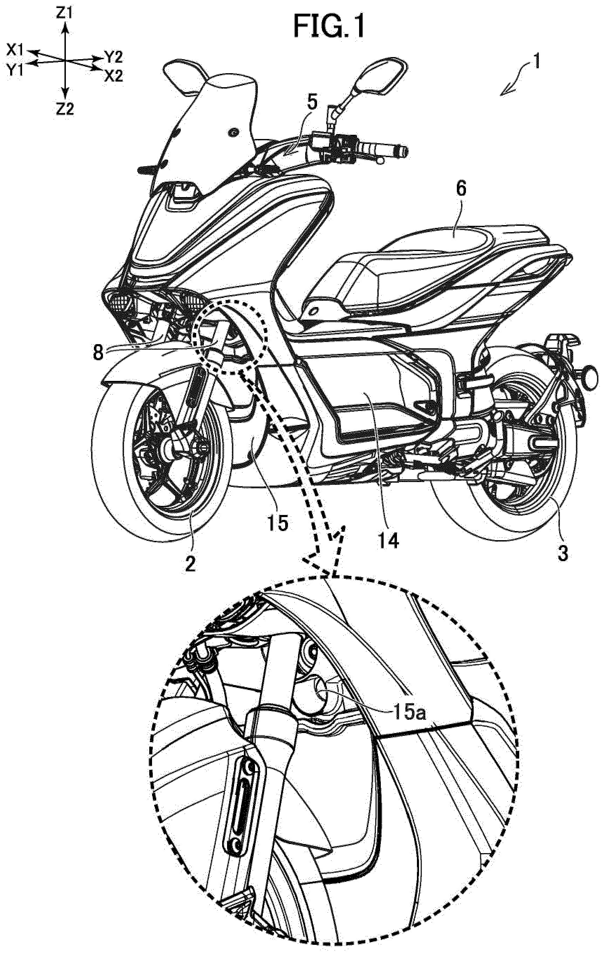

In the following, a straddled electric vehicle proposed in this embodiment will be described. In this specification, as an example of a straddled electric vehicle, an electric two-wheeled vehicle 1 shown in drawings such as FIG. 1 will be described. The straddled electric vehicle may be a four-wheeled or three-wheeled electric vehicle having a seat on which a rider straddles and sits.

The terminology used herein is for the purpose of describing particular embodiments. As used herein, the term "and/or" includes any and all combinations of one or more of the associated listed items. As used herein, the singular forms "a," "an," and "the" are intended to include the plural forms as well as the singular forms, unless the context clearly indicates otherwise. It will be further understood that the terms "comprises", "comprising", "includes", and/or "including", when used in this specification, specify the presence of stated features, steps, operations, elements, and/or components, but do not preclude the presence or addition of one or more other features, steps, operations, elements, components, and/or groups thereof.

Unless otherwise defined, all terms (including technical and scientific terms) used herein have the same meaning as commonly understood by one having ordinary skill in the art to which the present teaching belongs. It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

In describing the present teaching, it will be understood that a number of technologies are disclosed. Each of these has individual benefit and each can also be used in conjunction with one or more, or in some cases all, of the other disclosed technologies. Accordingly, for the sake of clarity, this description will refrain from repeating every possible combination of the individual technologies in an unnecessary fashion.

In the following description, for purposes of explanation, numerous specific details are set forth in order to provide a thorough understanding of the present teaching.

The present disclosure is to be considered as an exemplification of the present teaching.

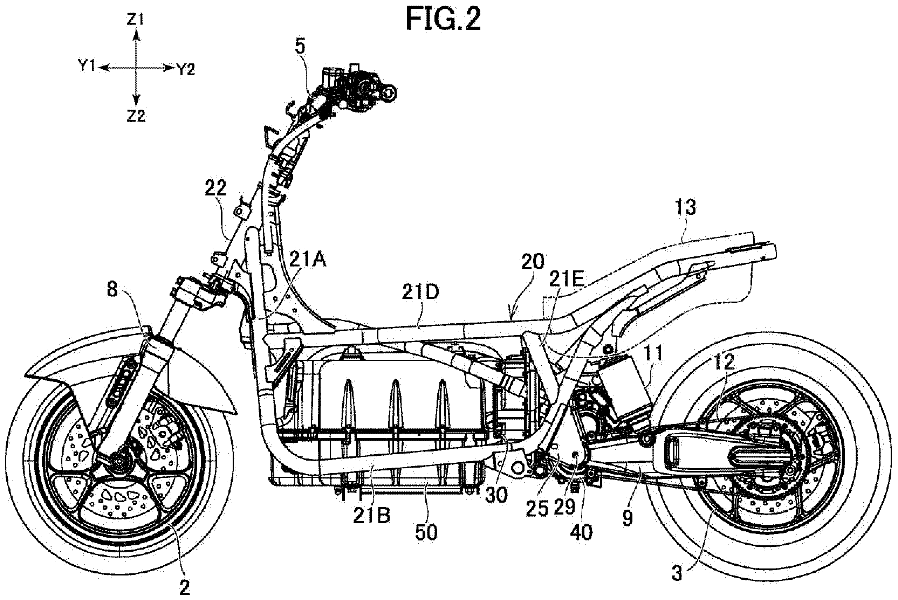

In the drawings such as FIG. 1, directions indicated by X1 and X2 are referred to as a right direction and a left direction, respectively, and directions indicated by Z1 and Z2 are referred to as an upward direction and a downward direction, respectively. The directions Y1 and Y2 shown in FIG. 2 are referred to as a forward direction and a rearward direction, respectively. Further, the direction indicated by X1-X2 is referred to as a vehicle width direction or a vehicle left-right direction. The direction indicated by Y1-Y2 is referred to as a vehicle longitudinal direction or a vehicle front-rear direction. The direction indicated by Z1-Z2 is referred to as a vehicle vertical direction or a vehicle up-down direction.

### [Outline of vehicle body]

As shown in FIG. 2, the electric two-wheeled vehicle 1 has a front wheel 2, a rear wheel 3, a steering handle 5 for steering the front wheel 2, and a seat 6 (see FIG. 1) disposed behind the steering handle 5. The electric two-wheeled vehicle 1 has a rear arm 9 connected to a body frame 20 via a pivot 29. The rear portion of the rear arm 9 is connected to the axle of the rear wheel 3. The electric two-wheeled vehicle 1 has a rear cushion 11 connected to the rear arm 9 and the body frame 20. The lower end of the rear cushion 11 is connected to the rear arm 9, and the upper end of the rear arm 9 is connected to the body frame 20 (more specifically, a frame rear portion 21C to be described later).

As shown in FIG. 2, the body frame 20 has, at its foremost portion, a head pipe 22 supporting a steering shaft to which the steering handle 5 is connected. The left and right front cushions 8 are connected to the lower portion of the steering shaft, and the front wheel 2 is supported by the lower end of the front cushions 8.

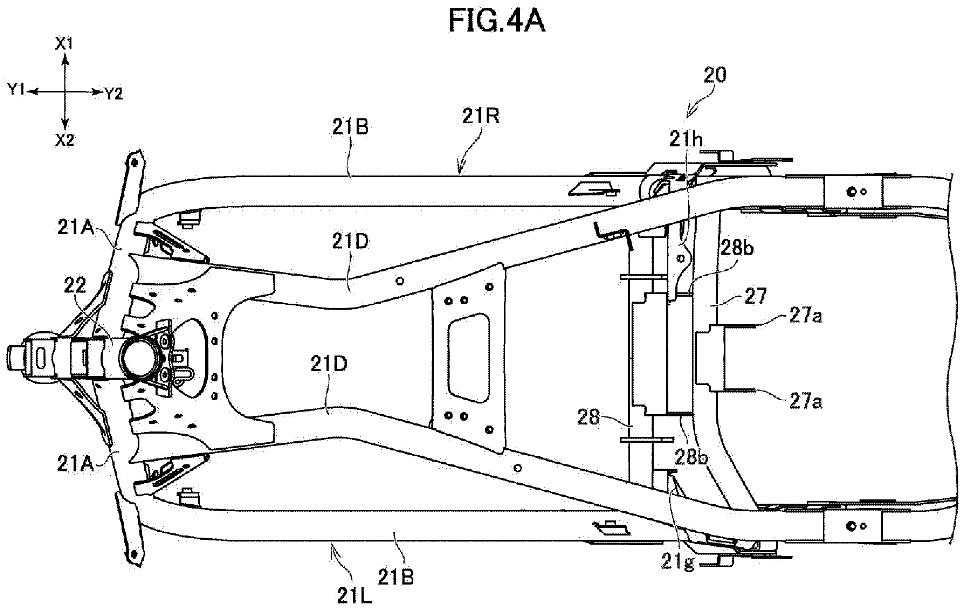

The body frame 20 has a right portion 21R (see FIG. 4A) and a left portion 21L (see FIG. 4A). As shown in FIG. 2, each of the right portion 21R and the left portion 21L includes a frame front portion 21A extending downward from the head pipe 22, a frame lower portion 21B extending rearward from the frame front portion 21A and disposed in the lower body, and a frame rear portion 21C extending obliquely rearward and upward from the frame lower portion 21B. The three portions 21A, 21B, and 21C may be formed of a single pipe, or a plurality of pipes connected to each other. The right portion 21R and the left portion 21L of the body frame 20 has a frame upper portion 21D. The frame upper portion 21D extends rearward from the middle of the frame front portion 21A, and is away upward from the frame lower portion 21B in a side view of the vehicle body. The upper portion of the frame rear portion 21C is connected to the rear portion of the frame upper portion 21D. The seat 6 is supported on the upper side of the rear portion of the frame upper portion 21D.

### [Outline of battery, motor drive unit, and motor unit]

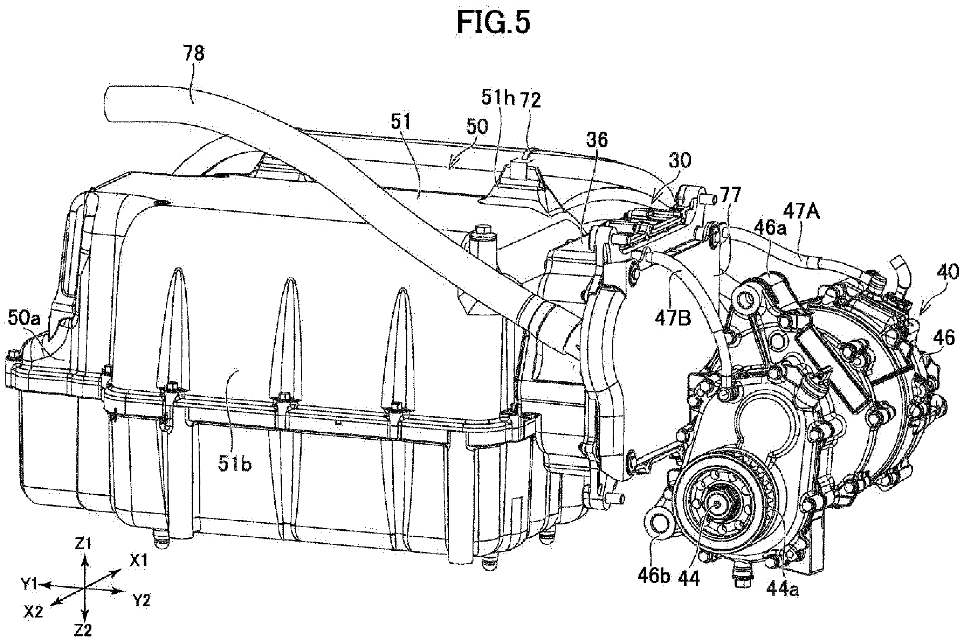

As shown in FIG. 5, the electric two-wheeled vehicle 1 includes a battery 50, a motor unit 40, and a motor drive unit 30.

The battery 50 includes a plurality of battery cells and a controller for controlling the charging and discharging of the battery 50. The battery 50 has a battery housing 51 containing the battery cells and the controller. The battery 50 is, for example, a lithium ion battery.

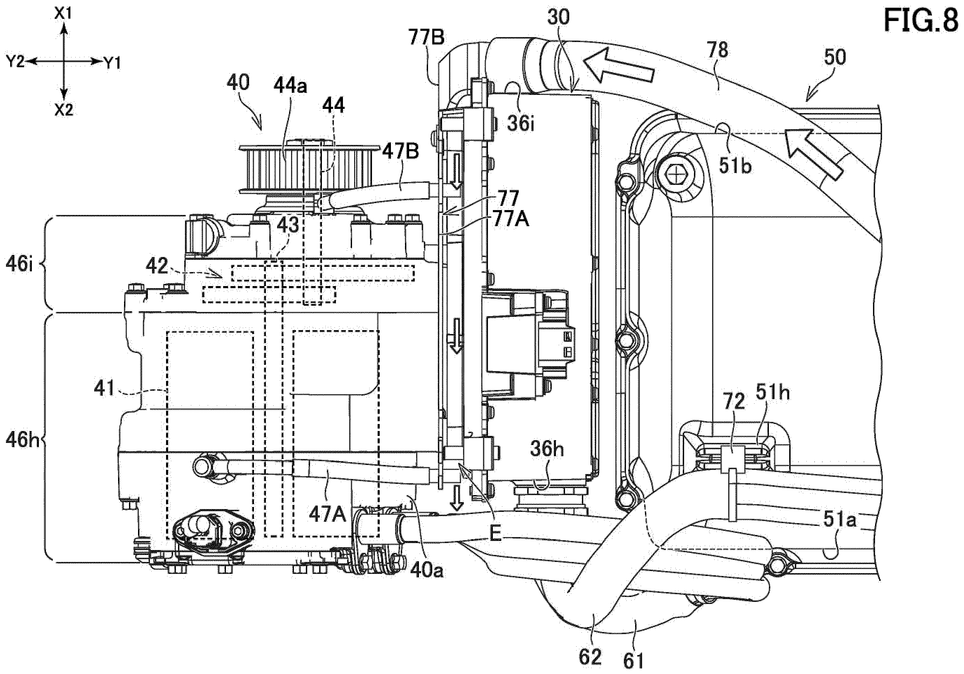

The motor unit 40 includes an electric motor 41 (see FIG. 8) and a case 46 containing the electric motor 41. The electric motor 41 is a driving source of the electric two-wheeled vehicle 1, and its rotation is transmitted to the rear wheel 3. In the example of the electric two-wheeled vehicle 1, the motor unit 40 has a speed reduction mechanism 42 (see FIG. 8). The speed reduction mechanism 42 is also housed in the case 46.

As shown in FIG. 8, the case 46 has, for example, a right housing portion 46h containing the electric motor 41 and a left housing portion 46i containing the speed reduction mechanism 42. The inside of the right housing portion 46h and the inside of the left housing portion 46i may be partitioned.

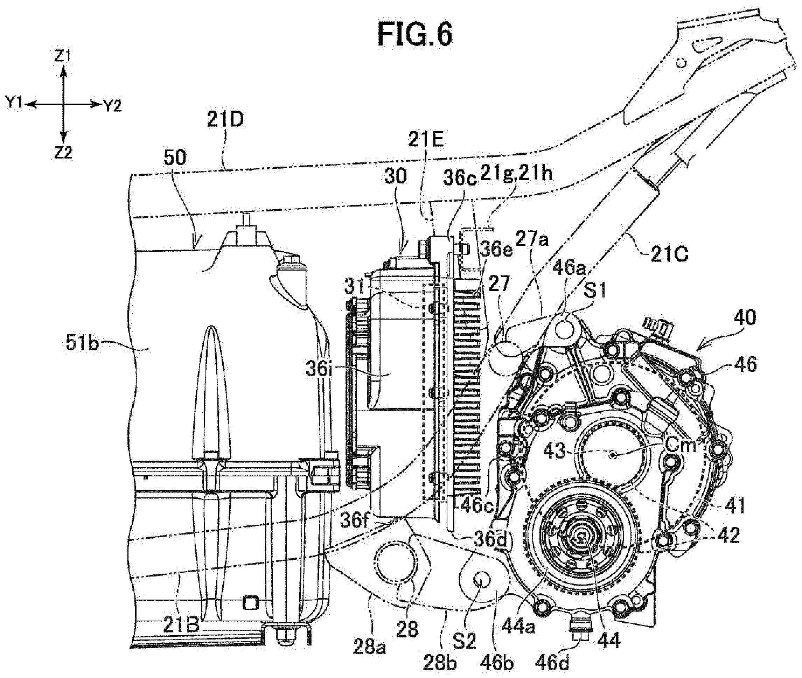

As shown in FIG. 6, the motor unit 40 includes a first rotation shaft 43 (see FIG. 8) at the rotation center Cm of the electric motor 41, and a second rotation shaft 44 (see FIG. 8) radially away from the first rotation shaft 43 of the electric motor 41. The speed reduction mechanism 42 is supported by the rotation shafts 43 and 44. The rotation of the electric motor 41 is input to the first rotation shaft 43. The speed reduction mechanism 42 reduces the rotation of the first rotation shaft 43 and transmits the rotation to the second rotation shaft 44.

The speed reduction mechanism 42 is a gear type, for example, and is composed of a gear supported by the first rotation shaft 43 and a gear supported by the second rotation shaft 44. The speed reduction mechanism 42 may be a belt type, for example. The speed reduction mechanism 42 may be a transmission capable of changing the reduction ratio.

The second rotation shaft 44 is, for example, an output shaft of the motor unit 40, and is connected to the rear wheel 3 via a rotation transmission component such as a belt, a chain, and a shaft. In the example of the electric two-wheeled vehicle 1, the rotation transmission component is a belt 12 (see FIG. 2), and a pulley 44a (see FIG. 5) for catching the foremost portion of the belt 12 is attached to the end of the second rotation shaft 44. The pivot 29 (see FIG. 2) supporting the rear arm 9 and the second rotation shaft 44 are aligned on the same axis.

The first rotation shaft 43 is coaxial with the rotation center Cm of the electric motor 41. The second rotation shaft 44 is positioned below the first rotation shaft 43. Further, the second rotation shaft 44 is positioned forward than the first rotation shaft 43. With this layout of the second rotation shaft 44, the distance from the second rotation shaft 44 to the axle of the rear wheel 3 (in other words, the length of the rear arm 9) can be increased without increasing the wheel base.

Unlike the example of the electric two-wheeled vehicle 1, the second rotation shaft 44 may be positioned directly below the first rotation shaft 43 or may be positioned rearward than the first rotation shaft 43. In yet another example, the motor unit 40 may not have the second rotation shaft 44.

The motor drive unit 30 includes a drive circuit 31 (see FIG. 6) and a case 36 containing the drive circuit 31. The drive circuit 31 uses the power of the battery 50 to supply electric power corresponding to the rider's accelerator operation (operation of the accelerator grip provided in the steering handle 5) to the electric motor 41. The electric motor 41 is an AC motor (e.g., three-phase AC motor). The drive circuit 31 includes an inverter, which converts the DC power output by the battery 50 to AC power of a frequency corresponding to the vehicle speed. The inverter is composed of a semiconductor switching device, such as FET (Field Effect Transistor).

The electric two-wheeled vehicle 1 may have a vehicle control unit (not shown) having a microprocessor or a memory. The vehicle control unit calculates a command value (current command value) based on the accelerator operation, and outputs a signal corresponding to the command value. The drive circuit 31 supplies power corresponding to the command value to the electric motor 41. The arrangement of the vehicle control unit is not particularly limited.

As shown in FIG. 2, the battery 50 is disposed at the center of the vehicle body. At least the front portion of the battery 50 is located forward than the seat 6 (see FIG. 1). In one example, the entire battery 50 is located forward than the seat 6. Alternatively, only the front portion of the battery 50 may be located forward than the seat 6, and the rear portion of the battery 50 may be located rearward than the seat 6. The height of the battery 50 is lower than the front end of the seat 6.

The motor unit 40 is located behind the battery 50 and below the seat 6. The motor drive unit 30 is positioned between the battery 50 and the motor unit 40. That is, the motor drive unit 30 is disposed rearward of the battery 50, and the motor unit 40 is disposed further rearward of the motor drive unit 30. In the example of the electric two-wheeled vehicle 1, the motor drive unit 30 is disposed such that the front and rear surfaces of the motor drive unit 30 are substantially perpendicular to the longitudinal direction of the vehicle body. Similarly, the battery 50 is disposed such that the rear surface of the battery 50 is also substantially perpendicular to the longitudinal direction of the vehicle body. The battery 50, the motor drive unit 30, and the motor unit 40 are positioned between the right portion 21R and the left portion 21L of the body frame 20 in a plan view of the vehicle body. The battery 50, the motor drive unit 30, and the motor unit 40 may be partially located outside the right portion 21R and the left portion 21L of the body frame 20.

### [Support of motor unit]

The motor unit 40 is supported by the body frame 20. As shown in FIG. 5, the motor unit 40 (more specifically, the case 46) may have an upper mounting portion 46a and a lower mounting portion 46b, which are attached to the body frame 20. The number of mounting portions of the motor unit 40 may be two, for example. As such, the motor unit 40 may not need to have a portion to be attached to the body frame 20 in an area located rearward than the two mounting portions 46a and 46b. This structure provides a large space behind the motor unit 40.

In the example of the electric two-wheeled vehicle 1, a storage case 13 (see FIG. 2) for housing the equipment such as a helmet may be disposed below the seat 6 and above the motor unit 40. The motor unit 40 does not have a portion to be attached to the body frame 20 in an area located rearward than the mounting portions 46a and 46b, and thus the depth of the storage case 13 can be increased at the rear side of the upper mounting portion 46a.

The component that utilizes the space between the motor unit 40 and the seat 6 may not be the storage case 13. For example, a spare battery may be disposed between the motor unit 40 and the seat 6. In this case, the capacity of the spare battery can be increased.

### [Position of upper mounting portion]

The upper surface of the case 46 may be curved to match the outer shape of the electric motor 41 in a side view of the vehicle body. The case 46 may have a convex portion protruding upward from its upper surface. The upper mounting portion 46a may be formed at an end portion of the convex portion. In the example of the electric two-wheeled vehicle 1, the upper mounting portion 46a may be a portion where a through-hole, into which a coupling shaft S1 (see FIG. 6) described later is inserted, is formed.

As shown in FIG. 6, the upper mounting portion 46a may be positioned forward than the rotation center Cm of the electric motor 41. That is, the upper mounting portion 46a may be forward from the vertical plane passing through the rotation center Cm. According to this structure, the position of the upper mounting portion 46a can be lowered as compared with the structure in which the upper mounting portion 46a is located directly above the rotation center Cm. As a result, the space between the seat 6 and the motor unit 40 (in the example of the electric two-wheeled vehicle 1, the space for the storage case 13) can be increased.

As shown in FIG. 6, the position of the upper mounting portion 46a may be lower than the upper end 36c of the motor drive unit 30. This structure can increase the capacity of the storage case 13 disposed in the space formed above the motor unit 40.

According to the above-described structure of mounting the motor unit 40, the space is provided behind the motor unit 40, and thus it is also possible to move the position of the rear cushion 11 forward. In the example of the electric two-wheeled vehicle 1, the upper end of the rear cushion 11 may be coupled to the body frame 20 at a position located forward than the rear wheels 3 and located rearward than the upper mounting portion 46a of the motor unit 40. As a result, when the electric two-wheeled vehicle 1 travels, the vibration acting on the rear portion of the frame upper portion 21D, which supports the seat 6, through the rear cushion 11 can be reduced. In the example of the electric two-wheeled vehicle 1, the upper end of the rear cushion 11 may be positioned above the motor unit 40 in a side view of the vehicle body. On the other hand, the lower end of the rear cushion 11 may be coupled to the rear arm 9 at a position forward than the rear wheel 3 and rearward than the motor unit 40. The position of the rear cushion 11 is not limited to the example shown in FIG. 2.

### [Support structure of upper and lower mounting portions]

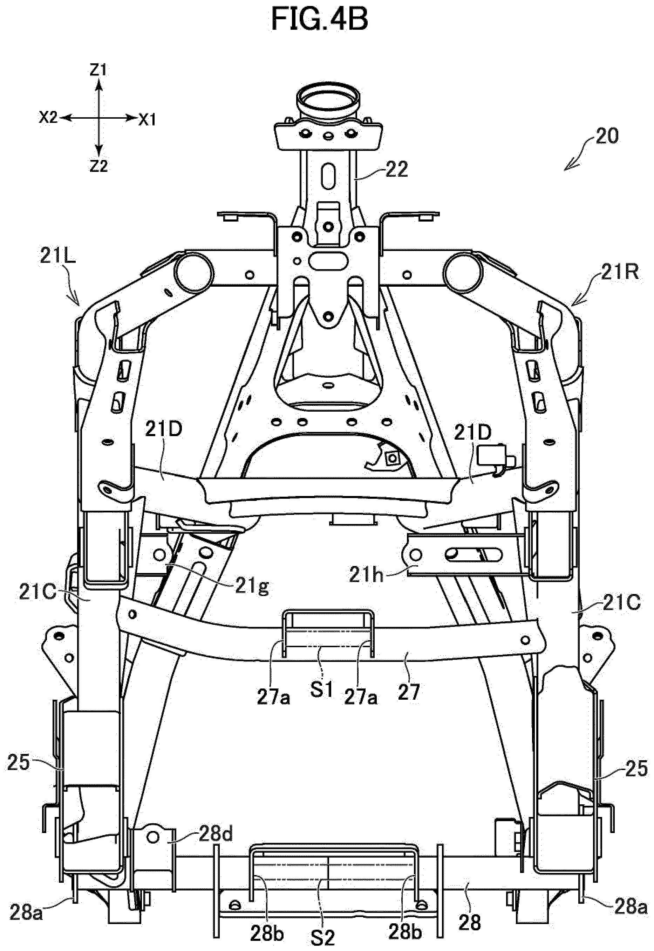

As shown in FIG. 4B, the body frame 20 may have cross portions 27 and 28, which are stretched between the right portion 21R and the left portion 21L of the body frame 20. The cross portions 27 and 28 may be separated in the vertical direction. The upper cross portion 27 may be stretched between the middle portions of the left and right frame rear portions 21C, for example. The lower cross portion 28 may be stretched between the lower portions of the left and right frame rear portions 21C (rear portions of the left and right frame lower portions 21B), for example. The motor unit 40 may be supported by the cross portions 27 and 28.

The left and right brackets 27a (see FIG. 4B) may be attached to the upper cross portion 27. The left and right brackets 27a may support the coupling shaft S1. The upper mounting portion 46a is cylindrical, and the coupling shaft S1 may be passed through the upper mounting portion 46a. In this manner, the upper mounting portion 46a is supported by the cross portion 27 via the coupling shaft S1 and the brackets 27a.

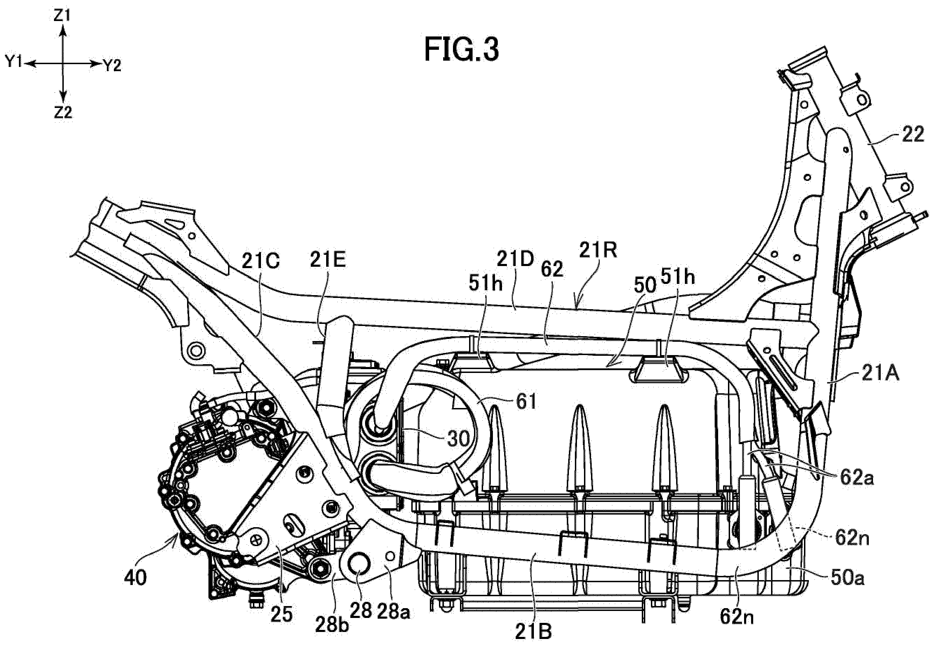

As shown in FIG. 6, the body frame 20 may have brackets 28a extending rearward obliquely and downwardly from the lower portion of the left and right frame rear portions 21C (in other words, the rear portion of the left and right frame lower portions 21B). The lower cross section 28 (see FIG. 3B) may be supported by left and right brackets 28a. The left and right brackets 28b (see FIG. 4B) extending rearward may be attached to the lower cross portion 28. The left and right brackets 28b may support the coupling shaft S2. The case 46 of the motor unit 40 may have a convex portion projecting obliquely forward and downward from the lower portion of its front surface 46c. The lower mounting portion 46b may be formed at the end portion of the convex portion. The lower mounting portion 46b has a through hole formed therein, and the coupling shaft S2 may be provided through the lower mounting portion 46b. In this manner, the lower mounting portion 46b can be supported by the cross portion 28 via the brackets 28b and the coupling shaft S2.

The lower portion of the frame rear portion 21C may be fixed to brackets 25 for supporting the pivot 29 (see FIG. 2) of the rear arm 9. The brackets 25 may extend rearwardly from the lower portion of the frame rear portion 21C. In a side view of the vehicle body, the upper cross section 27 may be positioned above the brackets 25. The lower cross section 28 may be located below and forward of the brackets 25. The stiffness of the portion of the body frame 20 where the brackets 25 are provided can be increased by the cross sections 27 and 28.

### [Position of the lower mounting portion]

The lower portion of the case 46 of the motor unit 40 may be curved to match the outer shape of the gear disposed on the second rotation shaft 44. The lower mounting portion 46b may be positioned forward than the rotation center of the second rotation shaft 44. This structure enables the lower mounting portion 46b to be positioned higher as compared with the structure in which the lower mounting portion 46b is positioned below the second rotation shaft 44. As a result, while ensuring the minimum ground height of the vehicle body, the position of the motor unit 40 can be lowered, and the capacity of the storage case 13 can be thereby increased.

As described above, the lower mounting portion 46b may be formed at the end of the convex portion projecting obliquely forward and downward from the front surface 46c of the case 46. Accordingly, the position of the lower mounting portion 46b may be forward than the front surface 46c of the case 46 of the motor unit 40. Further, the entire convex portion at which the lower mounting portion 46b is formed may be positioned forward than the rotation center of the second rotation shaft 44. Alternatively, the bottom of the convex portion may be positioned below the rotation center of the second rotation shaft 44, and the front end of the convex portion (i.e., the lower mounting portion 46b) may be positioned forward than the vertical plane passing through the rotation center of the second rotation shaft 44.

The lower mounting portion 46b may be positioned below the rotation center of the second rotation shaft 44. That is, the lower mounting portion 46b may be positioned below the horizontal plane passing through the rotation center of the second rotation shaft 44. With this structure, the distance between the upper mounting portion 46a and the lower mounting portion 46b can be increased in the vertical direction, and the support strength of the motor unit can be thereby increased.

The position of the lower mounting portion 46b may be higher than the lower end 46d of the motor unit 40 (the lower end of the case 46). This prevents the lower mounting portion 46b from affecting the minimum ground height of the electric two-wheeled vehicle 1.

The motor unit 40 may not necessarily have the second rotation shaft 44. In this case as well, the upper mounting portion 46a and the lower mounting portion 46b may be preferably located forward than the rotation center Cm of the electric motor 41. This structure can reduce the size in the vertical direction of the motor unit 40 as compared with the case where the upper mounting portion 46a and the lower mounting portion 46b are respectively disposed directly above and below the rotation center Cm of the electric motor 41.

### [Relative position between motor drive unit and motor unit]

The motor drive unit 30 may be disposed in front of the motor unit 40. As shown in FIG. 6, the lower mounting portion 46b may be positioned below the lower end 36d of the motor drive unit 30. This structure allows the motor unit 40 to be positioned closer to the motor drive unit 30 while avoiding interference between the lower mounting portion 46b and the motor drive unit 30. As a result, the size of the vehicle body in the longitudinal direction can be reduced. In the example of the electric two-wheeled vehicle 1, the position of the second rotation shaft 44 is also lower than the lower end 36d of the motor drive unit 30.

The front end of the lower mounting portion 46b may be positioned forward than the rear end of the motor drive unit 30. With this structure, the motor unit 40 and the motor drive unit 30 can be efficiently disposed in a small space. In the example of the electric two-wheeled vehicle 1, as shown in FIG. 6, the front end of the lower mounting portion 46b may be positioned forward than the rear end of a fin 36e formed on the rear surface of the motor drive unit 30. Unlike the example of the electric two-wheeled vehicle 1, the position of the lower mounting portion 46b may be rearward from the rear end (fin 36e) of the motor drive unit 30.

As described above, the lower mounting portion 46b may be supported by the body frame 20. The support structure of the lower mounting portion 46b may be located below the motor drive unit 30. In the example of the electric two-wheeled vehicle 1, as shown in FIG. 6, the lower cross portion 28 and the brackets 28b extending rearward from the lower cross portion 28 may be positioned below the motor drive unit 30. This enables to effectively use the space below the motor drive unit 30.

As shown in FIG. 6, the motor drive unit 30 may offset upward relative to the battery 50. That is, the center of the motor drive unit 30 in the vertical direction may be positioned above the center of the battery 50 in the vertical direction. The height of the lower surface 36f of the motor drive unit 30 may be thus above the lower surface of the battery 50. Further, a space may be formed rearward of the lower portion of the battery 50 and below the motor drive unit 30, and the lower cross portion 28 and the brackets 28b may be disposed in this space.

The relationship between the position of the motor drive unit 30 and the position of the battery 50 is not limited to the example of the electric two-wheeled vehicle 1. For example, the position of the motor drive unit 30 may not be offset upward relative to the position of the battery 50. In this case as well, if the size in the vertical direction of the motor drive unit 30 is smaller than the size in the vertical direction of the battery 50, the position of the lower surface 36f of the motor drive unit 30 is higher than the lower surface of the battery 50. As a result, the space formed behind the lower portion of the battery 50 can be effectively utilized.

### [Support structure of motor drive unit]

As shown in FIG. 2, a reinforcing portion 21E extending in the vertical direction may be disposed between the frame upper portion 21D and the frame rear portion 21C. As shown in FIG. 4B, brackets 21g and 21h extending toward the center of the vehicle width direction may be formed on the reinforcing portion 21E. The upper portion of the motor drive unit 30 (upper portion of the case 36) may be attached to the brackets 21g and 21h in the longitudinal direction. As shown in FIG. 4B, the brackets 28d may be also formed in the lower cross portion 28. The lower portion of the motor drive unit 30 may be attached to the brackets 28d in the longitudinal direction.

### [First cable harness]

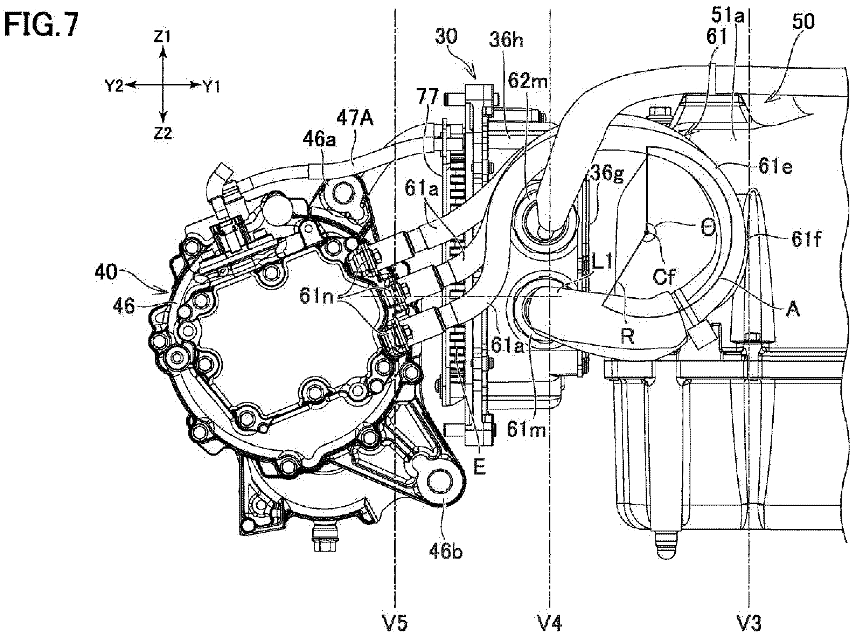

As shown in FIG. 7, the electric two-wheeled vehicle 1 has a first cable harness 61 for electrically connecting the electric motor 41 and the drive circuit 31. The power for driving the electric motor 41 is supplied from the drive circuit 31 to the electric motor 41 through the first cable harness 61. The first cable harness 61 may have a plurality of power cables 61a. The electric motor 41 may be a three-phase AC motor, for example, and the first cable harness 61 may include three power cables 61a, for example.

### [Margin of first cable harness]

The motor unit 40 may be located behind the motor drive unit 30. The length of the first cable harness 61 connecting the electric motor 41 and the drive circuit 31 may have a margin than the shortest length connecting them. As such, as shown in FIG. 7, the first cable harness 61 may have, in the middle thereof, a portion 61e located forward than the front surface 36g of the motor drive unit 30. Hereinafter, the portion 61e is referred to as a "margin".

In the assembly process of the electric two-wheeled vehicle 1, in a state where the motor drive unit 30 and the motor unit 40 are connected by the first cable harness 61, the work of mounting the motor drive unit 30 on the body frame 20 and the work of mounting the motor unit 40 on the body frame 20 may be sequentially performed. For example, before being mounted on the body frame 20, sometimes the units 40 and 30 may be connected to each other by the first cable harness 61 for inspection. In that case, the subsequent mounting operation of the units 40 and 30 will be performed in a state where the units 40 and 30 are connected by the first cable harness 61. This mounting operation is restricted by the length of the first cable harness 61. In the example of the electric two-wheeled vehicle 1, the first cable harness 61 includes the margin 61e located forward than the front surface 36g of the motor drive unit 30, and thus the length of the first cable harness 61 has a sufficient margin, and the workability of mounting the units 40 and 30 can be thereby improved.

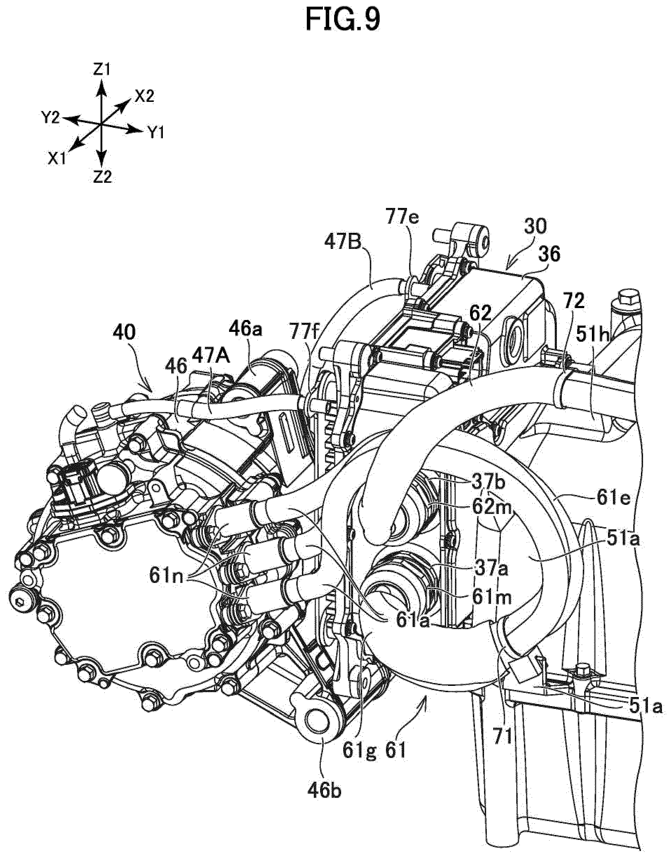

As shown in FIG. 9, one end of the first cable harness 61 may be connected to the side surface of the motor drive unit 30. A connector 61m may be provided at the end of the first cable harness 61. The connector 61m may be connected to a connector 37a provided on the side surface of the motor drive unit 30. The other end of the first cable harness 61 may be connected to the motor unit 40. As described above, the first cable harness 61 may have the three power cables 61a. A connector 61n may be provided at each of the ends of the power cables 61a. The connectors 61n may be respectively connected to the three connectors provided in the motor unit 40.

### [Details of margin]

As shown in FIG. 7, the first cable harness 61 may have a foremost portion 61f in the margin 61e. The foremost portion 61f may be a portion positioned most forwardly in the first cable harness 61. The distance between a vertical plane V3 passing through the foremost portion 61f and a vertical plane V4 passing through the connector 61m (the end on the motor drive unit 30 side ) may be longer than the distance between the vertical plane V4 passing through the connector 61m and a vertical plane V5 passing through the connector 61n (the end on the motor unit 40 side). Here, the vertical plane V4 is a vertical plane passing through the center of the connector 61m in a side view of the vehicle body. The vertical plane V5 is a vertical plane passing through the middle connector 61n of the three connectors 61n.

The margin 61e of the first cable harness 61 may be curved over 180 degrees or more in a side view of the vehicle body. In the example of the electric two-wheeled vehicle 1, as shown in FIG. 7, the margin 61e may be curved along an arc A defined around its inner center Cf. The angle θ of the arc A may be 180 degrees or more. In the example of the electric two-wheeled vehicle 1, the entire curved portion along the arc A may be positioned forward than the front surface 36g of the motor drive unit 30. Unlike the example of the electric two-wheeled vehicle 1, only a portion of the curved portion along the arc A may be positioned forward than the front surface 36g of the motor drive unit 30. Due to the curved portion, the extending direction of the first cable harness 61 is reversed in the middle of the first cable harness 61.

The radius of curvature R of the arc A along the margin 61e may be greater than three times a diameter of each power cable 61a. This prevents a large load on the power cables 61a. The radius of curvature R may be greater than four times a diameter of each power cable 61a.

As shown in FIG. 9, in the vicinity of the connector 61m on the motor drive unit 30 side, the first cable harness 61 may have a curved portion 61g that is curved in a plan view of the vehicle body. The radius of curvature of the curved portion 61g may also be greater than three times a diameter of each power cable 61a. The radius of curvature of the curved portion 61g may also be greater than four times the diameter of the power cable 61a.

As shown in FIG. 7, the connector 61n connected to the motor unit 40 may be located behind the connector 61m connected to the motor drive unit 30. In other words, the connectors 61m and 61n may be located at substantially the same height. As such, in a side view of the vehicle body, there may exist a straight line L1 along the longitudinal direction intersecting with both the connector 61m and the connector 61n. In the example of the electric two-wheeled vehicle 1, the straight line L1 may intersect the middle connector 61n of the connectors 61n on the motor unit 40 side. With this structure, the linear distance between the connectors 61m and 61n is reduced. As such, the margin of the length of the first cable harness 61 is relatively increased.

The margin 61e of the first cable harness 61 may overlap the battery 50 disposed in front of the motor drive unit 30 in a side view of the vehicle body. This allows for a compact layout of the motor unit 40, the motor drive unit 30, and the battery 50, which are aligned in the longitudinal direction. Further, the position of the first cable harness 61 can be defined by utilizing the battery 50. For example, as shown in FIG. 9, the margin 61e can be clamped to the cable mounting portion 51e formed on the side surface of the battery 50 with the use of a clamp member 71.

### [Relative position between motor drive unit and battery]

As shown in FIG. 8, the right side surface 36h of the motor drive unit 30 may be positioned closer to the center of the vehicle width direction than the right side surface 51a of the battery 50. That is, in a plan view of the vehicle body, the right side surface 36h of the motor drive unit 30 may be recessed from the right side surface 51a of the battery 50. This can provide a space behind the right portion of the battery 50. The first cable harness 61 may protrude to the right from the connector 37a provided on the right side surface 36h of the motor drive unit 30 (see FIG. 9). This arrangement of the motor drive unit 30 prevents the vehicle width from increasing due to the first cable harness 61 protruding from the right side surface 36h of the motor drive unit 30.

In the example of the electric two-wheeled vehicle 1, the motor drive unit 30 may be offset leftward relative to the battery 50. That is, the center of the motor drive unit 30 in the left-right direction may be shifted to the left from the center of the battery 50 in the left-right direction. This allows for a space behind the right portion of the battery 50 for connecting the first cable harness 61 and the left side surface 0 of and the motor drive unit 30. In this space, the end of a second cable harness 62 to be described later on the motor drive unit 30 side may also be disposed.

### [Relative position between motor drive unit and motor unit]

As shown in FIG. 8, the motor unit 40 may have a portion 40a located to the right of the right side surface 36h of the motor drive unit 30. In the following, the portion 40a will be referred to as a rightmost portion. A portion of the electric motor 41 may be disposed on the rightmost portion 40a of the motor unit 40. The connector 61n of the first cable harness 61 may be connected to the rightmost portion 40a of the motor unit 40. The first cable harness 61 may extend forward from the rightmost portion 40a of the motor unit 40 in a plan view of the vehicle body. The first cable harness 61 extends forward from the motor unit 40 as described, which serves to prevent an increase in the vehicle width.

### [Overall of first cable harness]

As shown in FIG. 7, in a side view of the vehicle body, the first cable harness 61 may extend obliquely upward and forward from the rightmost portion 40a of the motor unit 40, and may be curved over 180 degrees or more in the margin 61e. The end of the first cable harness 61 (connector 61m) may be connected to the connector 37a provided on the right side surface 36h of the motor drive unit 30.

As shown in FIG. 3, the position of the portion located forward than the front surface 36g of the motor drive unit 30 in the first cable harness 61 (highest position in the margin 61e) may be lower than the frame upper portion 21D. The position of the margin 61e (highest position in the margin 61e) may be lower than the upper end of the battery 50. In the example of the electric two-wheeled vehicle 1, the upper end of the battery 50 may be the upper end of the cable mounting portion 51h to which the second cable harness 62 to be described later is clamped.

The position and connection of the first cable harness 61 are not limited to the example of the electric two-wheeled vehicle 1. For example, the first cable harness 61 may extend obliquely upward and forward from the left portion of the motor unit 40. The first cable harness 61 may be connected to the left side surface 36i of the motor drive unit 30.

### [Example of inspection]

The first cable harness 61 has a sufficient margin 61e, which serves to improve the workability of mounting the units 40 and 30 in a case where the units 30 and 40 are connected to each other by the first cable harness 61 for inspection of the units 30 and 40 and then the units 30 and 40 are sequentially mounted on the body frame 20. The inspection performed before mounting the units 30 and 40 is, for example, an inspection of the airtightness of the case 46 of the motor unit 40 and the case 36 of the motor drive unit 30.

For example, this inspection is performed as follows: The motor unit 40 is connected to the motor drive unit 30 by the first cable harness 61. The case 46 of the motor unit 40 is connected to a breather hoses 47A and 47B (see FIG. 8) to allow air flow between the inside and the outside of the case 46. The breather hose 47A is connected to the right housing portion 46h containing the electric motor 41 in the case 46 and adjusts the atmospheric pressure therein. The breather hose 47B is connected to the left housing portion 46i containing the speed reduction mechanism 42 in the case 46 and adjusts the air pressure therein. At the time of inspection, air is pumped to the case 46 through the breather hoses 47A and 47B to inspect the airtightness of the case 46. Further, the motor unit 40 and the motor drive unit 30 are connected to each other by the first cable harness 61, and thus the airtightness of the motor drive unit 30 can also be inspected.

### [Second cable harness]

As shown in FIG. 3, the electric two-wheeled vehicle 1 may have a second cable harness 62 for electrically connecting the drive circuit 31 and the battery 50. The power may be provided from the battery 50 to the drive circuit 31 through the second cable harness 62. The second cable harness 62 may include two power cables 62a.

As shown in FIG. 8, both the first cable harness 61 and the second cable harness 62 may be disposed in the same direction from the center of the vehicle body in the left-right direction. As described above, the connector 61m of the first cable harness 61 may be connected to the connector 37a provided on the right side surface 36h of the motor drive unit 30. As shown in FIG. 9, the rear end of the second cable harness 62 is provided with the connector 62m connected to the connector 37b provided on the right side surface 36h of the motor drive unit 30. The right side surface 36h of the motor drive unit 30 is located closer to the center of the vehicle width direction from the right side surface 51a of the battery 50, and thus the space may be provided behind the right portion of the battery 50. The connector 61m of the first cable harness 61 and the connector 62m of the second cable harness 62 can be disposed using this space. This can prevent an increase in the vehicle width of the electric two-wheeled vehicle 1.

As shown in FIG. 3, the front end of the second cable harness 62 may be connected to the right side surface 51a of the battery 50. More specifically, the two power cables 62a of the second cable harness 62 may have connectors 62n at their front ends. The battery 50 may have two connectors on the right side of the lower portion of its foremost portion 50a. The connectors 62n of the second cable harness 62 may be respectively connected to the two connectors.

### [Intersection of two cable harnesses]

As shown in FIG. 7, the second cable harness 62 may be positioned to the right of the first cable harness 61. That is, the second cable harness 62 may be positioned outward in the vehicle width direction from the first cable harness 61. The second cable harness 62 may intersect the first cable harness 61 in a side view of the vehicle body and may be clamped to the battery 50 by a clamping member 72 (see FIG. 9). This prevents the first cable harness 61 from moving outward in the vehicle width direction. The component to which the second cable harness 62 is clamped may not be the battery 50. For example, the second cable harness 62 may be clamped to the body frame 20.

As shown in FIG. 7, in the example of the electric two-wheeled vehicle 1, the first cable harness 61 may extend obliquely upward and forward from the connector 61n connected to the motor unit 40. The first cable harness 61 may be then curved downward. The connector 62m of the second cable harness 62 (the connector on the motor drive unit 30 side) may be positioned above the connector 61m of the first cable harness 61. The second cable harness 62 extends upward from the connector 62m and intersect the first cable harness 61. In one example, the outer surface of the second cable harness 62 is in contact with the outer surface of the first cable harness 61, although they may not necessarily be in contact with.

The margin 61e of the first cable harness 61 may also be clamped to the battery 50 by the clamping member 71 (see FIG. 9). The position where the first cable harness 61 and the second cable harness 62 intersect is located rearward than the battery 50, and may be away from the position of the clamping member 71. That is, the second cable harness 62 may restrict the movement of the first cable harness 61 (movement to the right) at the position away from the clamp member 71.

### [Arrangement of second cable harness]

The second cable harness 62 may be disposed on the upper side of the battery 50, for example, may overlap the battery 50 in a plan view of the vehicle body. This arrangement of the second cable harness 62 prevents an increase in the vehicle width due to the second cable harness 62.

The battery 50 may have a plurality of cable mounting portions 51h (see FIG. 3) protruding upward on its upper surface. The second cable harness 62 may extend forward on the upper side of the battery 50. The second cable harness 62 may be clamped to the cable mounting portion 51h by the clamp member 72.

The cable mounting portion 51h may be positioned toward the center in the vehicle width direction than the right side surface 51a of the battery 50. As such, the second cable harness 62 is also positioned toward the center in the vehicle width direction than the right side surface 51a. As a result, the first cable harness 61 intersecting the second cable harness 62 can be positioned toward the center in the vehicle width direction.

The width of the foremost portion 50a of the battery 50 in the left-right direction may be smaller than the width at the rear portion than the foremost portion 50a. The battery 50 may have a connector on the right side of its foremost portion 50a. The second cable harness 62 may extend forward along the upper surface of the battery 50, and may be then curbed and extend downwardly along the right side of the foremost portion 50a of the battery 50. The connector 62n of the second cable harness 62 may be connected to a connector provided on the right side surface of the foremost portion 50a. Such a shape of the battery 50 and arrangement of the second cable harness 62 can prevent an increase in the vehicle width due to the second cable harness 62.

### [Other examples of cable harness arrangement]

The layout of the cable harnesses 61 and 62 is not limited to the example of the electric two-wheeled vehicle 1. For example, the first cable harness 61 may be positioned outward of the second cable harness 62 in the vehicle width direction. In this case, the first cable harness 61 can prevent the second cable harness 62 from moving outward in the vehicle width direction.

In yet another example, the cable harnesses 61 and 62 may be positioned to the left of the center in the vehicle width direction. In this case as well, the two cable harnesses 61 and 62 may intersect, and one cable harness may restrict the movement of the other cable harness (movement outward in the vehicle width direction).

In yet another example, the first cable harness 61 may extend obliquely forward and downward from the motor unit 40. The first cable harness 61 may be curved upward thereafter and connected to the right side surface 36h of the motor drive unit 30. In this case, the second cable harness 62 may be disposed along the right side surface 51a of the battery 50 to restrict the movement of the first cable harness 61. The second cable harness 62 disposed along the right side surface 51a of the battery 50 may be clamped to the frame lower portion 21B of the body frame 20.

### [Air guide for motor drive unit]

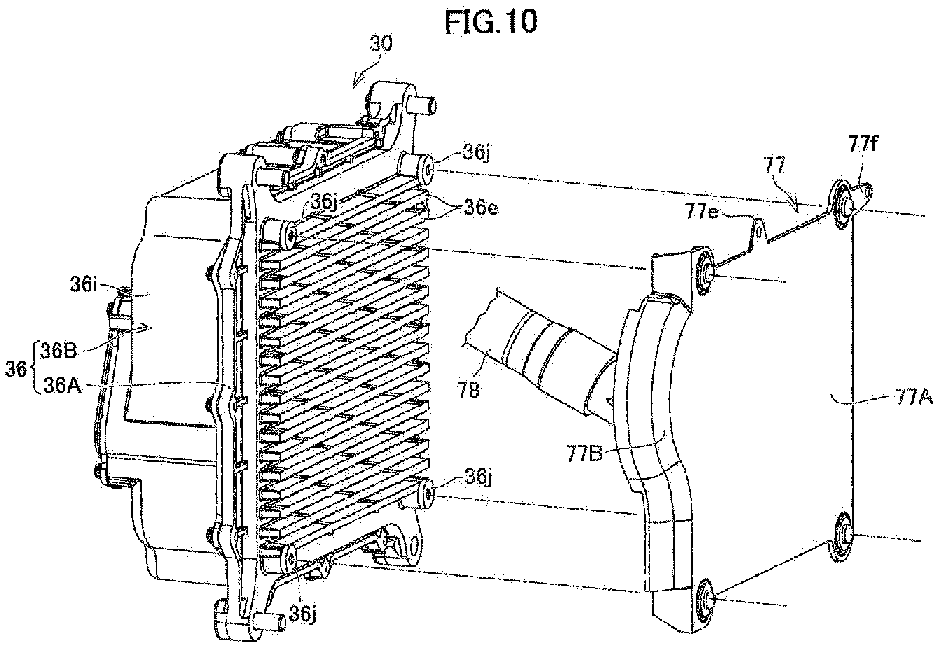

The case 36 of the motor drive unit 30 may have a heat radiating portion on the rear surface. As shown in FIG. 10, the case 36 may have a plurality of fins 36e as heat radiating portions. The case 36 may have a rear plate 36A that forms the rear surface. The fins 36e may be formed on the rear surface of the rear plate 36A. The case 36 may be box-shaped, and the drive circuit 31 (see FIG. 6) may be disposed inside the case 36. The drive circuit 31 may be attached to the rear plate 36A. The heat from the drive circuit 31 is transferred to the rear plate 36A, and can be released from the fins 36e. The case 36 may include a front case portion 36B that covers the front side of the drive circuit 31 and is combined with the rear plate 36A in the longitudinal direction. The rear plate 36A and the front case portion 36B may be formed of metal.

The size of the battery 50may be larger than the motor drive unit 30 in the vertical and left-right directions. In a front view of the vehicle body, the motor drive unit 30 may be disposed so as to overlap the battery 50. As such, when the electric two-wheeled vehicle 1 travels, at least a part of the air flow to the motor drive unit 30 is blocked by the battery 50.

As shown in FIG. 10, the electric two-wheeled vehicle 1 may include an air guide 77. The air guide 77 may include a cover portion 77A that covers the rear surface of the case 36. In the example of the electric two-wheeled vehicle 1, the cover portion 77A may cover the entire fins 36e formed on the rear surface of the case 36. Air flow path may be formed between the rear surface of the case 36 and the cover portion 77A. Each fin 36e extends in the left-right direction, and the fins 36e may be arranged in the vertical direction. The air flow path extending in the left-right direction may be provided between the cover portion 77A and the rear surface of and the case 36.

The air guide 77 may be attached to the motor drive unit 30. This structure serves to appropriately set the distance between the motor drive unit 30 and the air guide 77. In the example of the electric two-wheeled vehicle 1, the air guide 77 may be attached to the mounting portions 36j formed on the rear surface of the rear plate 36A.

As shown in FIG. 9, a plurality of mounting portions 77e and 77f may be formed on the upper edge of the air guide 77. The above-described front end of the breather hoses 47A and 47B connected to the motor unit 40 may be held by the mounting portions 77e and 77f, for example. Alternatively, the edges of the breather hoses 47A and 47B may be held by the body frame 20 (e.g., brackets 21g, 21h).

### [Projecting portion]

The air guide 77 may have a projecting portion 77B extending leftward from the cover portion 77A. The projecting portion 77B may extend to the left beyond the left side surface 36i of the motor drive unit 30. This structure can use the projecting portion 77B to deliver air to the rear surface of the case 36 so as to cool the drive circuit 31.

The direction in which the projecting portion 77B extends may not necessarily be left and may be any direction if the direction intersects the direction in which the battery 50 and the motor drive unit 30 are aligned (longitudinal direction in the example of the electric two-wheeled vehicle 1). For example, the projecting portion 77B may extend from the cover portion 77A to the right, and exceed the position of the right side surface 36h of the motor drive unit 30. As yet another example, the projecting portion 77B may extend downward from the cover portion 77A, and exceed the position of the lower surface of the motor drive unit 30. The projecting portion 77B may extend obliquely left, right, or downward.

### [Air duct]

In the example of the electric two-wheeled vehicle 1, an air duct 78 may be connected to the projecting portion 77B. The air duct 78 may extend forward from the projecting portion 77B. The front end of the air duct 78 may open forward, for example. With this structure, when the vehicle travels, the air taken in at the front end of the air duct 78 can be sent to the air guide 77 through the air duct 78. The air passes between the cover portion 77A and the rear surface of the case 36 (i.e., between the fins 36e and the cover portion 77A).

As shown in FIG. 5, the air duct 78 may be disposed above the battery 50. This prevents an increase in the vehicle width due to the air duct 78. The electric two-wheeled vehicle 1 may have a body cover 14 (see FIG. 1) covering the upper, right, and left sides of the battery 50. The air duct 78 may be disposed between the body cover 14 and the battery 50.

The front end of the air duct 78 may be located, for example, behind the front wheel 2. As shown in FIG. 1, the electric two-wheeled vehicle 1 may have a battery guard 15 located behind the front wheel 2 and in front of the battery 50. An opening 15a may be formed in the battery guard 15. The front end of the air duct 78 may be connected to the opening 15a. In a front view of the vehicle body, the opening 15a may be located between the left and right cushions 8 that support the front wheel 2.

The position of the front end (opening) of the air duct 78 is not limited to the example of the electric two-wheeled vehicle 1. For example, an opening may be formed in the vehicle cover 14 covering the right side and the left side of the battery 50, and the front end of the air duct 78 may be connected to the opening.

As shown in FIG. 8, the position of the motor drive unit 30 may be shifted to the left from the battery 50. That is, the center of the motor drive unit 30 in the left-right direction may be shifted to the left from the center of the battery 50 in the left-right direction. As such, it is easy to feed the rear surface of the case 36 by utilizing the projecting portion 77B. In the example of the electric two-wheeled vehicle 1, the left side surface 36i of the motor drive unit 30 may be positioned to the left than the left side surface 51b of the battery 50. The projecting portion 77B may extend leftward beyond the position of the left side surface 51b of the battery 50.

### [Exhaust port]

As shown in FIG. 9, an exhaust port E may be formed on the opposite side of the projecting portion 77B across the cover portion 77A covering the fins 36e. In the example of the electric two-wheeled vehicle 1, the exhaust port E may be open to the right. The air passing between the cover portion 77A and the rear surface of the case 36 (i.e., between the cover portion 77A and the fins 36e) can be discharged from the exhaust port E.

The positions of the exhaust port E and the projecting portion 77B are not limited to the example of the electric two-wheeled vehicle 1. The projecting portion 77B may extend downward from the cover portion. In this case, the exhaust port E may open upward, and each fin 36e may extend in the vertical direction. Further, the exhaust port E may open in two orthogonal directions. For example, the exhaust port E may open downward and rightward. In this case, the heat radiating portion of the case 36 may be a plurality of columnar projections instead of the fins 36e.

### [Shape of projecting portion]

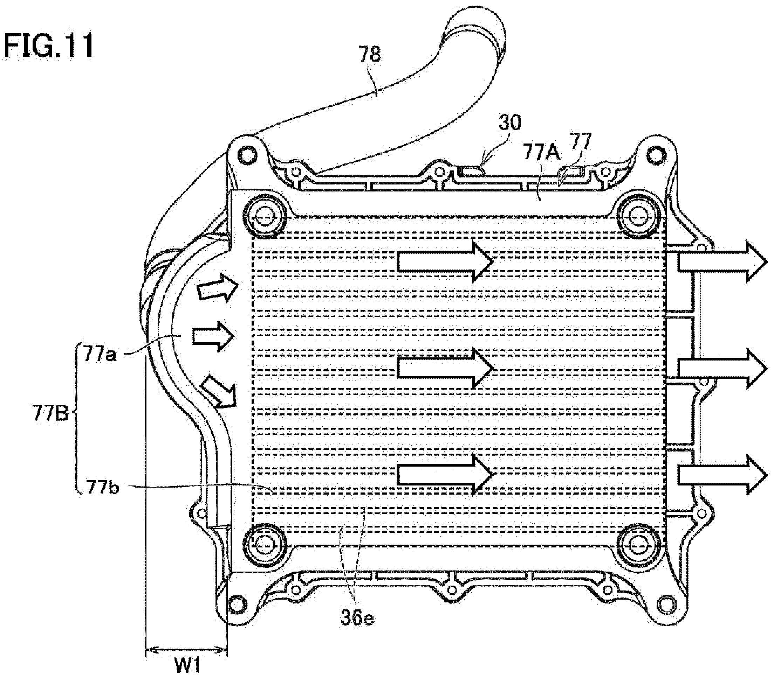

As shown in FIG. 11, the width of the projecting portion 77B (width in the left-right direction) may be smaller as it is further away from the connection position of the duct 78 upward or downward. In FIG. 11, a reference symbol W1 is attached to the maximum width of the projecting portion 77B. The width of the upper portion 77a of the projecting portion 77B may be smaller as the width approaches upward or downward. On the other hand, the width of the lower portion 77b of the projecting portion 77B may be smaller than that of the upper portion 77a, and may be constant in the vertical direction.

In the example of electric two-wheeled vehicle 1, while the motor drive unit 30 is located behind the battery 50, the air duct 78 may be located above the battery 50. As such, air introduced at the front end of the air duct 78 can flow obliquely rearward and downward. If the width of the projecting portion 77B is even from the upper end to the lower end of the cover portion 77A, air flows intensively to the lower fins 36e. In contrast, in the example of the electric two-wheeled vehicle 1, the width of the projecting portion 77B is smaller in the lower portion 77b of the cover portion 77A, and thus it is possible to prevent the air from concentrating on the lower fins 36e. In other words, the air can be sent to the entire fins 36e.

### [Variation of air guide]

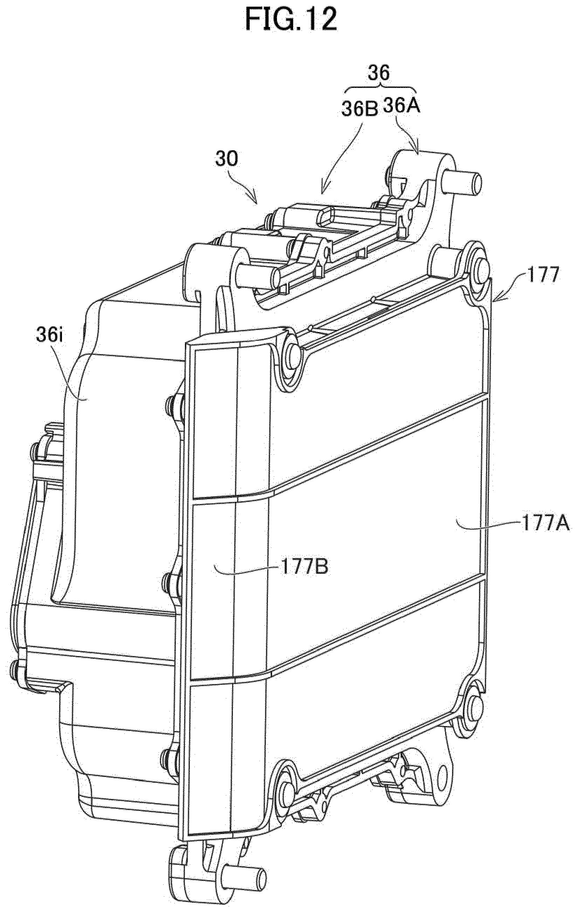

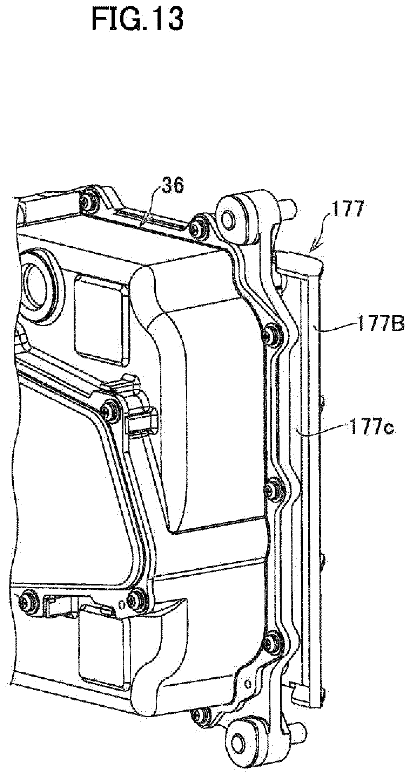

The electric two-wheeled vehicle 1 may not have the air duct 78. FIGs. 12 and 13 are diagrams illustrating examples of a structure in which the air duct 78 is not provided.

In the examples shown in FIGs. 12 and 13, an air guide 177 may be attached to the motor drive unit 30. The air guide 177 may include a projecting portion 177B extending leftward from the cover portion 177A. The projecting portion 177B may have a front surface 177c exposed forward. The edge of the projecting portion 177B may be curved forward. The projecting portion 177B may extend to the left beyond the left side surface 36i of the motor drive unit 30. When the electric two-wheeled vehicle 1 travels, air is received by the projecting portion 177B. The air is guided by the projecting portion 177B, passes between the cover portion 177A and the rear surface of the case 36, and can be discharged from the exhaust port E. The width of the projecting portion 177B may be even from the upper end to the lower end of the cover portion 177A.

As yet another example, the air guide 77 may include a right cover portion 77A and a left cover portion 77A with the exhaust port E therebetween. In this case, the air guide 77 may have the projecting portion 77B extending to the right from the cover portion 77A on the right, and the projecting portion 77B extending to the left from the cover portion 77A on the left.

### [Conclusion]

(1) The motor unit 40 includes the upper mounting portion 46a and the lower mounting portion 46b that are attached to the body frame 20 and does not include a portion that is attached to the body frame 20 rearward than the upper mounting portion 46a and the lower mounting portion 46b. The upper mounting portion 46a is located forward than the rotation center Cm of the electric motor 41. This structure can lower a position of the upper mounting portion 46a as compared with a structure in which the upper mounting portion 46a is located upward from the rotation center Cm of the electric motor 41. As a result, the space between the seat 6 and the motor unit 40 can be increased.
(2) The motor unit 40 includes the first rotation shaft 43 at the rotation center Cm of the electric motor 41, the second rotation shaft 44 away from the first rotation shaft 43, the speed reduction mechanism 42 supported by the first rotation shaft 43 and the second rotation shaft 44. The second rotation shaft 44 is located below the first rotation shaft 43, and the lower mounting portion 46b is located forward than the rotation center of the second rotation shaft 44. This structure enables the lower mounting portion 46b to be positioned higher as compared with a structure in which the lower mounting portion 46b is positioned below the second rotation shaft 44. As a result, while ensuring the minimum ground height of the vehicle body, the position of the motor unit 40 can be lowered.
(3) The motor drive unit 30 is disposed behind the battery 50 and in front of the motor unit 40, and the lower mounting portion 46b is located below the lower end 36d of the motor drive unit 30. This structure allows the motor unit 40 to be positioned closer to the motor drive unit 30 that is located in front of the motor unit 40.
(4) The lower surface of the motor drive unit 30 is located above the lower surface of the battery 50, and the position of the lower mounting portion 46b is the same height as the lower surface of the battery 50 or higher than the lower surface of the battery 5. This structure can easily assure the minimum ground height of the vehicle body.
(5) The position of the upper mounting portion 46a is lower than the upper end 36c of the motor drive unit 30. This structure can increase space formed above the motor unit 40.
(6) The motor drive unit 30 is disposed behind the battery 50 and in front of the motor unit 40, and the body frame 20 includes a support structure below the motor drive unit 30, the support structure being mounted on the lower mounting portion 46b to support the motor unit 40. This structure can effectively utilize space formed below the motor drive unit 30 to support the motor unit 40.
(7) The motor unit 40 includes the first rotation shaft 43 at the rotation center Cm of the electric motor 41, the second rotation shaft 44 away from the first rotation shaft 41, the speed reduction mechanism 42 supported by the first rotation shaft 43 and the second rotation shaft 44. The second rotation shaft 44 may be located below the first rotation shaft 43 and forward than the first rotation shaft 43. This structure can increase a distance from the second rotation shaft 44 to the axle of the rear wheel 3 (in other words, the length of the rear arm 9) without increasing the wheel base.
(8) The lower mounting portion 46b is located forward than the rotation center of the second rotation shaft 44. This structure enables the lower mounting portion 46b to be positioned higher as compared with the structure in which the lower mounting portion 46b is positioned below the second rotation shaft 44. As a result, while ensuring the minimum ground height of the vehicle body, the position of the motor unit 40 can be lowered.
(9) The position of the second rotation shaft 44 is lower than the lower end 36d of the motor drive unit 30. This structure can easily prevent interference between the motor unit 40 and the motor drive unit 30.
(10) The storage case 13 is disposed above the motor unit 40 and below the seat 6. With this structure, a case having a large capacity can be used as the storage case 13.
(11) The upper end of the rear cushion 11 coupled to the rear arm 9 and the body frame 20 is located forward than the rear wheel 3 and rearward than the upper mounting portion 46a of the motor unit 40. With this structure, when the electric two-wheeled vehicle 1 travels, the vibration acting on the rear portion of the body frame 20, which supports the seat 6, through the rear cushion 11 can be reduced.

The structure of the electric two-wheeled vehicle proposed in the present disclosure is not limited to the example of the electric two-wheeled vehicle 1, and various modifications may be made.

For example, in the electric two-wheeled vehicle 1, the first cable harness 61 has the margin 61e, and the motor drive unit 30 is disposed between the battery 50 and the motor unit 40. However, the structure of the electric two-wheeled vehicle in which the motor unit 40 is provided with two mounting portions 46a and 46b (the structure referred to in (1)) may be applied to an electric two-wheeled vehicle having a different layout. Further, the electric two-wheeled vehicle 1 may not have the air guide 77. In this case, each fin 36e formed on the rear surface of the motor drive unit 30 may extend in the vertical direction.

## Claims

1. A straddled electric vehicle comprising:
a seat (6);
a battery (50);
a motor unit (40) including an electric motor (41) configured to be driven by power of the battery (50), the motor unit (40) being disposed below the seat (6) with regard to vehicle up-down direction (Z1-Z2) and behind the battery (50) with regard to vehicle front-rear direction (Y1-Y2);
a rear wheel (3) disposed behind the motor unit (40) with regard to the vehicle front-rear direction (Y1-Y2);
a rear arm (9) supporting the rear wheel (3);
a body frame (20) supporting the motor unit (40), and
a rear cushion (11) coupled to the rear arm (9) and the body frame (20), wherein
the motor unit (40) includes an upper mounting portion (46a) and a lower mounting portion (46b) with regard to the vehicle up-down direction (Z1-Z2) that are attached to the body frame (20), at least one of the upper mounting portion (46a) and the lower mounting portion (46b) is a rearmost mounting portion with regard to the vehicle front-rear direction (Y1-Y2) that attaches the motor unit (40) to the body frame (20), and the upper mounting portion (46a) is located forward than a rotation center (Cm) of the electric motor (41) with regard to the vehicle front-rear direction (Y1-Y2), wherein
an upper end of the rear cushion (11) is located forward than the rear wheel (3) and rearward than the upper mounting portion (46a) of the motor unit (40) with regard to the vehicle front-rear direction (Y1-Y2), **characterized in that** the upper mounting portion (46a) and the lower mounting portion (46b) are located forward than the rotation center (Cm) of the electric motor (41).

2. The straddled electric vehicle according to claim 1, **characterized in that** the motor unit (40) includes the electric motor (41), a first rotation shaft (43) at the rotation center (Cm) of the electric motor (41), a second rotation shaft (44) away from the first rotation shaft (43), and a speed reduction mechanism (42) supported by the second rotation shaft (44),
the second rotation shaft (44) is located below the first rotation shaft (43) with regard to the vehicle up-down direction (Z1-Z2).

3. The straddled electric vehicle according to claim 2, **characterized in that** the second rotation shaft (44) is radially away from the first rotation shaft (43) in a direction of a radius of the electric motor (41).

4. The straddled electric vehicle according to claim 2 or 3, **characterized in that** the speed reduction mechanism (42) is supported by the first rotation shaft (43) and the second rotation shaft (44).

5. The straddled electric vehicle according to at least one of the claims 2 to 4, **characterized in that** the lower mounting portion (46b) is located forward than a rotation center of the second rotation shaft (44) with regard to the vehicle front-rear direction (Y1-Y2).

6. The straddled electric vehicle according to at least one of the claims 2 to 5, the second rotation shaft (44) is located below the first rotation shaft (43) with regard to the vehicle up-down direction (Z1-Z2) and forward than the first rotation shaft (43) with regard to the vehicle front-rear direction (Y1-Y2).

7. The straddled electric vehicle according to at least one of the claims 1 to 6, **characterized by** a motor drive unit (30) including a drive circuit (31) configured to supply power of the battery (50) to the electric motor (41).

8. The straddled electric vehicle according to claim 7, **characterized in that** the motor drive unit (30) is disposed behind the battery (50) and in front of the motor unit (40) with regard to the vehicle front-rear direction (Y1-Y2).

9. The straddled electric vehicle according to claim 7 or 8, **characterized in that** the lower mounting portion (46b) is located below a lower end of the motor drive unit (30) with regard to the vehicle up-down direction (Z1-Z2).

10. The straddled electric vehicle according to at least one of the claims 7 to 9, **characterized in that** a lower surface (36f) of the motor drive unit (30) is located above a lower surface of the battery (50) with regard to the vehicle up-down direction (Z1-Z2), and
a position of the lower mounting portion (46b) is a same height as the lower surface of the battery (50) or higher than the lower surface of the battery (50) with regard to the vehicle up-down direction (Z1-Z2).

11. The straddled electric vehicle according to at least one of the claims 7 to 10, **characterized in that** a position of the upper mounting portion (46a) is lower than an upper end of the motor drive unit (30) with regard to the vehicle up-down direction (Z1-Z2).

12. The straddled electric vehicle according to at least one of the claims 7 to 11, **characterized in that** the body frame (20) includes a support structure below the motor drive unit (30) with regard to the vehicle up-down direction (Z1-Z2), the support structure being mounted on the lower mounting portion (46b) to support the motor unit (40).

13. The straddled electric vehicle according to at least one of the claims 7 to 12, **characterized in that** a position of the second rotation shaft (44) is lower than a lower end of the motor drive unit (30) with regard to the vehicle up-down direction (Z1-Z2).

14. The straddled electric vehicle according to at least one of the claims 1 to 13, **characterized in that** a storage case (13) is disposed above the motor unit (40) and below the seat (6) with regard to the vehicle up-down direction (Z1-Z2).

## Patentansprüche

1. Ein Spreiz-Sitz-Elektro-Fahrzeug, das umfasst:
einen Sitz (6);
eine Batterie (50);
eine Motoreinheit (40), die einen Elektromotor (41) enthält, der konfiguriert ist, um durch die Energie der Batterie (50) angetrieben zu werden, die Motoreinheit (40) ist unter dem Sitz (6) in Bezug auf die Fahrzeug-Auf-Ab-Richtung (Z1-Z2) und hinter der Batterie (50) in Bezug auf die Fahrzeug-Vorder-Rück-Richtung (Y1-Y2) angeordnet;
ein Hinterrad (3), das hinter der Motoreinheit (40) in Bezug auf die Fahrzeug-Vorder-Rück-Richtung (Y1-Y2) angeordnet ist;
einen hinteren Arm (9), der das Hinterrad (3) lagert;
einen Körperrahmen (20), der die Motoreinheit (40) lagert, und
einen hintere Dämpfer (11), der mit dem hinteren Arm (9) und dem Körperrahmen (20) gekoppelt ist, wobei
die Motoreinheit (40) einen oberen Montageabschnitt (46a) und einen unteren Montageabschnitt (46b) in Bezug auf die Fahrzeug-Auf-Ab-Richtung (Z1-Z2) beinhaltet, die an dem Körperrahmen (20) angebracht sind, zumindest einer von dem oberen Montageabschnitt (46a) und dem unteren Montageabschnitt (46b) ein hinterster Montageabschnitt in Bezug auf die Fahrzeug-Vorder-Rück-Richtung (Y1-Y2) ist, der die Motoreinheit (40) an dem Körperrahmen (20) anbringt, und
der obere Montageabschnitt (46a) vor einem Drehzentrum (Cm) des Elektromotors (41) in Bezug auf die Fahrzeug-Vorder-Rück-Richtung (Y1-Y2) angeordnet ist, wobei ein oberes Ende des hinteren Dämpfers (11) vor dem Hinterrad (3) und hinter dem oberen Montageabschnitt (46a) der Motoreinheit (40) in Bezug auf die Fahrzeug-Vorder-Rück-Richtung (Y1-Y2) angeordnet ist, **dadurch gekennzeichnet, dass** der obere Montageabschnitt (46a) und der untere Montageabschnitt (46b) vor dem Drehzentrum (Cm) des Elektromotors (41) angeordnet sind.

2. Das Spreiz-Sitz-Elektro-Fahrzeug gemäß Anspruch 1, **dadurch gekennzeichnet, dass** die Motoreinheit (40) den Elektromotor (41), eine erste Drehwelle (43) im Drehzentrum (Cm) des Elektromotors (41), eine zweite Drehwelle (44), die von der ersten Drehwelle (43) entfernt ist, und einen Geschwindigkeitsreduktionsmechanismus (42) beinhaltet, der durch die zweite Drehwelle (44) gelagert wird,
die zweite Drehwelle (44) ist unterhalb der ersten Drehwelle (43) in Bezug auf die Fahrzeug-Auf-Ab-Richtung (Z1-Z2) angeordnet.

3. Das Spreiz-Sitz-Elektro-Fahrzeug gemäß Anspruch 2, **dadurch gekennzeichnet, dass** die zweite Drehwelle (44) radial von der ersten Drehwelle (43) in Richtung eines Radius des Elektromotors (41) entfernt ist.

4. Das Spreiz-Sitz-Elektro-Fahrzeug gemäß Anspruch 2 oder 3, **dadurch gekennzeichnet, dass** der Geschwindigkeitsreduktionsmechanismus (42) durch die erste Drehwelle (43) und die zweite Drehwelle (44) gelagert ist.

5. Das Spreiz-Sitz-Elektro-Fahrzeug gemäß zumindest einem der Ansprüche 2 bis 4, **dadurch gekennzeichnet, dass** der untere Montageabschnitt (46b) vor einem Drehzentrum der zweiten Drehwelle (44) in Bezug auf die Fahrzeug-Vorder-Rück-Richtung (Y1-Y2) angeordnet ist.

6. Das Spreiz-Sitz-Elektro-Fahrzeug gemäß zumindest einem der Ansprüche 2 bis 5, wobei die zweite Drehwelle (44) unterhalb der ersten Drehwelle (43) in Bezug auf die Fahrzeug-Aufwärts-Richtung (Z1-Z2) und vor der ersten Drehwelle (43) in Bezug auf die Fahrzeug-Vorder-Rück-Richtung (Y1-Y2) angeordnet ist.

7. Das Spreiz-Sitz-Elektro-Fahrzeug gemäß zumindest einem der Ansprüche 1 bis 6, **gekennzeichnet durch** eine Motorantriebseinheit (30), die eine Antriebsschaltung (31) beinhaltet, die konfiguriert ist, um den Elektromotor (41) mit Energie aus der Batterie (50) zu versorgen.

8. Das Spreiz-Sitz-Elektro-Fahrzeug gemäß Anspruch 7, **dadurch gekennzeichnet, dass** die Motorantriebseinheit (30) hinter der Batterie (50) und vor der Motoreinheit (40) in Bezug auf die Fahrzeug-Vorder-Rück-Richtung (Y1-Y2) angeordnet ist.

9. Das Spreiz-Sitz-Elektro-Fahrzeug gemäß Anspruch 7 oder 8, **dadurch gekennzeichnet, dass** der untere Montageabschnitt (46b) unterhalb eines unteren Endes der Motorantriebseinheit (30) in Bezug auf die Fahrzeug-Auf-Ab-Richtung (Z1-Z2) angeordnet ist.

10. Das Spreiz-Sitz-Elektro-Fahrzeug gemäß zumindest einem der Ansprüche 7 bis 9, **dadurch gekennzeichnet, dass** eine untere Fläche (36f) der Motorantriebseinheit (30) oberhalb einer unteren Fläche der Batterie (50) in Bezug auf die Fahrzeug-Auf-Ab-Richtung (Z1-Z2) angeordnet ist, und
eine Position des unteren Montageabschnitts (46b) die gleiche Höhe wie die untere Fläche der Batterie (50) oder höher als die untere Fläche der Batterie (50) in Bezug auf die Fahrzeug-Auf-Ab-Richtung (Z1-Z2) ist.

11. Das Spreiz-Sitz-Elektro-Fahrzeug gemäß zumindest einem der Ansprüche 7 bis 10, **dadurch gekennzeichnet, dass** eine Position des oberen Montageabschnitts (46a) niedriger ist als ein oberes Ende der Motorantriebseinheit (30) in Bezug auf die Fahrzeug-Auf-Ab-Richtung (Z1-Z2).

12. Das Spreiz-Sitz-Elektro-Fahrzeug gemäß zumindest einem der Ansprüche 7 bis 11, **dadurch gekennzeichnet, dass** der Körperrahmen (20) eine Lagerstruktur unterhalb der Motorantriebseinheit (30) in Bezug auf die Fahrzeug-Auf-Ab-Richtung (Z1-Z2) beinhaltet, wobei die Lagerstruktur am unteren Montageabschnitt (46b) angebracht ist, um die Motoreinheit (40) zu lagern.

13. Das Spreiz-Sitz-Elektro-Fahrzeug gemäß zumindest einem der Ansprüche 7 bis 12, **dadurch gekennzeichnet, dass** eine Position der zweiten Drehwelle (44) tiefer liegt als ein unteres Ende der Motorantriebseinheit (30) in Bezug auf die Fahrzeug-Auf-Ab-Richtung (Z1-Z2).

14. Das Spreiz-Sitz-Elektro-Fahrzeug gemäß zumindest einem der Ansprüche 1 bis 13, **dadurch gekennzeichnet, dass** ein Staukasten (13) oberhalb der Motoreinheit (40) und unterhalb des Sitzes (6) in Bezug auf die Fahrzeug-Auf-Ab-Richtung (Z1-Z2) angeordnet ist.

## Revendications

1. Véhicule électrique à califourchon comprenant :
un siège (6) ;
une batterie (50) ;
une unité de moteur (40) comprenant un moteur électrique (41) configuré pour être entraîné par l'énergie de la batterie (50), l'unité de moteur (40) étant disposée sous le siège (6) par rapport à la direction haut-bas du véhicule (Z1-Z2) et derrière la batterie (50) par rapport à la direction avant-arrière du véhicule (Y1-Y2) ;
une roue arrière (3) disposée derrière l'unité moteur (40) par rapport à la direction avant-arrière du véhicule (Y1-Y2) ;
un bras arrière (9) supportant la roue arrière (3) ;
un cadre de carrosserie (20) supportant l'unité de moteur (40), et
un coussin arrière (11) couplé au bras arrière (9) et au cadre de carrosserie (20), dans lequel l'unité de moteur (40) comprend une partie de montage supérieure (46a) et une partie de montage inférieure (46b) par rapport à la direction haut-bas du véhicule (Z1-Z2) qui sont fixées au cadre de carrosserie (20), au moins l'une de la partie de montage supérieure (46a) et de la partie de montage inférieure (46b) est une partie de montage la plus arrière par rapport à la direction avant-arrière du véhicule (Y1-Y2) qui fixe l'unité de moteur (40) au cadre de carrosserie (20), et la partie de montage supérieure (46a) est située en avant d'un centre de rotation (Cm) du moteur électrique (41) par rapport à la direction avant-arrière du véhicule (Y1-Y2), dans lequel une extrémité supérieure du coussin arrière (11) est située en avant de la roue arrière (3) et en arrière de la partie de montage supérieure (46a) de l'unité de moteur (40) par rapport à la direction avant-arrière du véhicule (Y1-Y2), **caractérisé en ce que** la partie de montage supérieure (46a) et la partie de montage inférieure (46b) sont situées en avant du centre de rotation (Cm) du moteur électrique (41).

2. Véhicule électrique à califourchon selon la revendication 1, **caractérisé en ce que** l'unité moteur (40) comprend le moteur électrique (41), un premier arbre de rotation (43) au centre de rotation (Cm) du moteur électrique (41), un second arbre de rotation (44) éloigné du premier arbre de rotation (43), et un mécanisme de réduction de vitesse (42) supporté par le second arbre de rotation (44),
le second arbre de rotation (44) est situé en dessous du premier arbre de rotation (43) par rapport à la direction de montée et de descente du véhicule (Z1-Z2).

3. Véhicule électrique à califourchon selon la revendication 2, **caractérisé en ce que** le second arbre de rotation (44) est radialement éloigné du premier arbre de rotation (43) dans une direction d'un rayon du moteur électrique (41).

4. Véhicule électrique à califourchon selon les revendications 2 ou 3, **caractérisé en ce que** le mécanisme de réduction de vitesse (42) est supporté par le premier arbre de rotation (43) et le second arbre de rotation (44).

5. Véhicule électrique à califourchon selon au moins l'une des revendications 2 à 4, **caractérisé en ce que** la partie de montage inférieure (46b) est située en avant d'un centre de rotation du second arbre de rotation (44) par rapport à la direction avant-arrière du véhicule (Y1-Y2).

6. Véhicule électrique à califourchon selon au moins l'une des revendications 2 à 5, le second arbre de rotation (44) est situé en dessous du premier arbre de rotation (43) par rapport à la direction haut-bas du véhicule (Z1-Z2) et en avant du premier arbre de rotation (43) par rapport à la direction avant-arrière du véhicule (Y1-Y2).

7. Véhicule électrique à califourchon selon l'une au moins des revendications 1 à 6, **caractérisé par** une unité d'entraînement moteur (30) comprenant un circuit d'entraînement (31) configuré pour fournir l'énergie de la batterie (50) au moteur électrique (41).

8. Véhicule électrique à califourchon selon la revendication 7, **caractérisé en ce que** l'unité d'entraînement moteur (30) est disposée derrière la batterie (50) et devant l'unité moteur (40) par rapport à la direction avant-arrière du véhicule (Y1-Y2).

9. Véhicule électrique à califourchon selon les revendications 7 ou 8, **caractérisé en ce que** la partie de montage inférieure (46b) est située en dessous d'une extrémité inférieure de l'unité d'entraînement du moteur (30) par rapport à la direction de montée et de descente du véhicule (Z1-Z2).

10. Véhicule électrique à califourchon selon au moins l'une des revendications 7 à 9, **caractérisé en ce qu'**une surface inférieure (36f) de l'unité d'entraînement du moteur (30) est située au-dessus d'une surface inférieure de la batterie (50) par rapport à la direction de montée et de descente du véhicule (Z1-Z2), et
une position de la partie de montage inférieure (46b) est une même hauteur que la surface inférieure de la batterie (50) ou plus haute que la surface inférieure de la batterie (50) par rapport à la direction de montée-descente du véhicule (Z1-Z2).

11. Véhicule électrique à califourchon selon au moins l'une des revendications 7 à 10, **caractérisé en ce qu'**une position de la partie de montage supérieure (46a) est inférieure à une extrémité supérieure de l'unité d'entraînement du moteur (30) par rapport à la direction de montée et de descente du véhicule (Z1-Z2).

12. Véhicule électrique à califourchon selon au moins l'une des revendications 7 à 11, **caractérisé en ce que** le cadre de carrosserie (20) comprend une structure de support sous l'unité d'entraînement du moteur (30) par rapport à la direction de montée et de descente du véhicule (Z1-Z2), la structure de support étant montée sur la partie de montage inférieure (46b) pour supporter l'unité de moteur (40).

13. Véhicule électrique à califourchon selon au moins une des revendications 7 à 12, **caractérisé en ce qu'**une position du second arbre de rotation (44) est plus basse qu'une extrémité inférieure de l'unité d'entraînement du moteur (30) par rapport à la direction de montée et de descente du véhicule (Z1-Z2).

14. Véhicule électrique à califourchon selon l'une au moins des revendications 1 à 13, **caractérisé en ce qu'**un coffre de rangement (13) est disposé au-dessus du groupe moteur (40) et en dessous du siège (6) par rapport à la direction de montée et descente du véhicule (Z1-Z2).
